# EUROPÄISCHE PATENTSCHRIFT

(11) **EP 0 325 162 B1**
(45) Veröffentlichungstag und Bekanntmachung des Hinweises auf die Patenterteilung: **21.07.1993**
(21) Anmeldenummer: 89100466.5
(22) Anmeldetag: 12.01.1989
(51) Int. Cl.: F02D 13/02, F01L 1/34

(54) **Laststeuer-Verfahren für eine quantitätsgesteuerte Hubkolben-Brennkraftmaschine**
Power control process for an internal-combustion piston engine with controlled cylinder charge
Procédé de commande de la puissance pour un moteur à combustion interne à pistons contrôlé par le remplissage des cylindres

(30) Priorität: 20.01.1988 DE 3801463
(43) Veröffentlichungstag der Anmeldung: 26.07.1989
(73) Patentinhaber: Bayerische Motoren Werke Aktiengesellschaft, 80788 München (DE)
(72) Erfinder: Rüth, Stefan, D-8046 Garching (DE); Langen, Peter, D-München 19 (DE)

(56) Entgegenhaltungen:
- DE-A- 2 451 064
- AUTOMOTIVE ENGINEERING, Band 90, Nr. 4, April 1982, Seiten 51-55, Society of Automotive Engineers, Inc., Dallas, Texas, US; "Engine load controlled via early intake valve closing"
- PATENT ABSTRACTS OF JAPAN, Band 7, Nr. 283 (M-263)[1428], 16. Dezember 1983;

## Beschreibung

Die Erfindung bezieht sich auf ein Verfahren zur Einstellung von Betriebspunkten einer Hubkolben-Brennkraftmaschine nach dem Oberbegriff des Anspruchs 1, und geht aus von der gattungsbildenden DE-A 27 47 884.

Beschrieben ist darin ein Verfahren zum Steuern des Betriebes einer Brennkraftmaschine, bei welchem sowohl der Öffnungs- als auch der Schließzeitpunkt des Einlaßventils bei abnehmender, von der Brennkraftmaschine abzugebender Leistung auf spät verlegt werden. Jene Schrift erwähnt des weiteren andere geläufige Laststeuer-Verfahren für insbesondere quantitätsgesteuerte Brennkraftmaschinen. Das auch heute noch gebräuchlichste Verfahren bestimmt durch eine im Ansaugtrakt vorgesehene Drosselklappe den wirksamen Einlaßquerschnitt des Saugrohres. Letztgenanntes Verfahren ist jedoch insbesondere bei starker Drosselung hinsichtlich seines Wirkungsgrades äußerst ungünstig. Vorteilhafter ist es, die Steuerzeiten der Ladungswechsel-Steuerorgane zu verändern, so wie es beispielsweise in o. g. Schrift näher beschrieben ist, da hiermit eine erwünschte Verwirbelung der Einlaßströmung erzielbar ist. Daß sich derartige Verfahren bis heute im Großserieneinsatz noch nicht durchgesetzt haben, liegt nicht nur in der teilweise etwas aufwendigeren Steuerungsmechanik begründet, sondern ist auch verursacht durch regelungstechnische und thermodynamische Probleme insbesondere im unteren Lastbereich einer Brennkraftmaschine.

Aufgabe der Erfindung ist es, ein im Hinblick auf jene Probleme optimiertes Laststeuer-Verfahren aufzuzeigen. Gelöst wird jene Aufgabe durch die kennzeichnenden Merkmale des ersten Anspruchs, vorteilhafte Weiterbildungen beschreiben die abhängigen Ansprüche.

Erfindungsgemäß ist das gesamte Betriebskennfeld der Brennkraftmaschine in zumindest zwei Lastbereiche aufgeteilt, wobei in einem oberen Lastbereich vorrangig die Laststeuerung durch Drosselung der Ansaugluftmenge zum Einsatz kommt, während in einem unteren Lastbereich bei konstanter Drosselung durch Verändern der Steuerzeiten gesteuert wird. Somit kann das noch vorhandene im Ansaugtrakt vorgesehene Drosselorgan - beispielsweise in Form einer Drosselklappe - somit vorteilhafterweise deutlich vereinfacht ausgebildet werden; weder sind aufwendige Progressionskulissen, noch ist eine genau definierte Leckluftmenge erforderlich. Vorteile zeigt das erfindungsgemäße Laststeuer-Verfahren auch hinsichtlich der Abgasemissionen sowie der Abgastemperaturen. Durch die bei entsprechender Veränderung der Steuerzeiten aufgrund des durch die konstante Drosselung erzeugten Gegendruckes teilweise auftretende innere Abgasrückführung werden bereits die Rohemissionen deutlich reduziert. Ist darüberhinaus die Brennkraftmaschine beispielsweise mit einem Abgaskatalysator versehen, so ist unter Anwendung des erfindungsgemäßen Laststeuer-Verfahrens im unteren Lastbereich eine erwünschte Erhöhung der Abgastemperaturen zur verbesserten Konvertierung schädlicher Abgasbestandteile möglich.

Vorteilhaft ist es dabei, lediglich die Steuerzeiten der Ladungswechsel-Steuerorgane zu verändern, deren Öffnungsdauer jedoch konstant zu halten, da dieser Eingriff insbesondere bei einer Ladungswechselsteuerung durch Hubventile mit einer Nockenwelle durch Verdrehen dieser Nockenwelle einfach realisierbar ist und dabei ausreichenden Regelungsspielraum läßt. Um das Laststeuer-Verfahren hinsichtlich seiner Steuercharakteristik sowie Auswirkungen auf die Brennkraftmaschine (beispielsweise Rundlauf etc.) weiter zu optimieren, kann beim Übergang von einem oberen zu einem unteren Lastbereich zusätzlich kurzzeitig die Kraftstoffzufuhr abgeschaltet werden. Eventuelle Trägheitsprobleme in der Laststeuerung werden somit ausgeschaltet.

Anspruch 4 definiert den zweiten Lastbereich näher als Leerlauf. Ein bislang neben der Drosselklappe üblicher Leerlaufsteller zur gezielten Beigabe der jeweils erforderlichen Leerlaufluftmenge kann somit entfallen oder zumindest deutlich einfacher ausgeführt werden. Vorteilhafterweise ist dabei eine Regelungsvorrichtung, vorzugsweise elektronische Regelung, vorgesehen, welche durch Veränderung der Steuerzeiten eine von den aktuellen Betriebsbedingungen unabhängige konstante Leerlaufdrehzahl einregelt. Darüberhinaus kann es vorteilhaft sein, an einer fremdgezündeten Brennkraftmaschine zusätzlich zu den o. g. Maßnahmen zur Laststeuerung - und insbesondere zur Leerlaufregelung - den Zündzeitpunkt zu verändern.

Zwar ist es bereits aus der DE-A-24 51 064 bekannt, zugleich mit der Laststeuerung mittels eines Drosselorganes die Steuerzeiten der Ladungswechsel-Steuerorgane zu verändern, um eine bessere Verbrennung zu erzielen, eine Aufteilung im verschiedene Lastbereiche, in denen zur Steuerung der Brennkraftmaschine entweder die Ansaugluftmenge gedrosselt oder bei konstanter Drosselung die Steuerzeiten der Steuerorgane verändert werden, ist hierbei jedoch nicht vorgesehen. Gleiches gilt für den Artikel "Engine load controlled via early intake valve closing" der Zeitschrift "Automotive Engineering", Band 90, Nr. 4, April 1982, S. 51 bis 55, da dieser Artikel im wesentlichen nur die Vorteile einer Brennkraftmaschinen-Laststeuerung durch Veränderung des maximalen Ventilhubes sowie Schließzeitpunktes der Einlaßventile beschreibt.

Ein Ausführungsbeispiel ist nicht gezeigt, da das erfindungsgemäße Laststeuer-Verfahren dem Fachmann geläufige Vorrichtungen zu Hilfe nimmt. Die Drosselung der Ansaugluftmenge kann mittels einer üblichen Drosselklappe erfolgen, zur Veränderung der Steuerzeiten kann bei Vorhandensein von Hubventilen sowie einer Nockenwelle eine an sich bekannte Nockenwellen-Verdrehvorrichtung vorgesehen sein. Derartige Details sind auch nicht Wesen der vorliegenden Erfindung; wesentlich ist es vielmehr, das Betriebskennfeld einer Brennkraftmaschine in zumindest zwei Lastbereiche aufzuteilen, wobei in einem oberen Lastbereich die Laststeuerung vorrangig durch Drosselung der Ansaugluftmenge erfolgt, während in einem unteren Lastbereich bei konstanter Drosselung die Steuerzeiten der Ladungswechsel-Steuerorgane verändert werden.

## Patentansprüche

1. Verfahren zur Einstellung von Betriebspunkten einer quantitätsgesteuerten Hubkolben-Brennkraftmaschine durch Beeinflussung der zugeführten Ansaugluftmenge,
wobei Steuerorgane für den Ladungswechsel sowie ein Drosselorgan im Ansaugtrakt vorgesehen sind,
dadurch gekennzeichnet, daß das Betriebskennfeld in zumindest zwei Lastbereiche aufgeteilt ist,
wobei in einem oberen Lastbereich vorrangig die Ansaugluftmenge gedrosselt wird,
und wobei in einem unteren Lastbereich ohne Veränderung der Drosselung die Einstellung der Brennkraftmaschinen-Betriebspunkte durch Veränderung der Steuerzeiten der Ladungswechsel-Steuerorgane erfolgt.

2. Verfahren nach Anspruch 1,
dadurch gekennzeichnet, daß bei Veränderung der Steuerzeiten der Ladungswechsel-Steuerorgane deren Öffnungsdauer konstant gehalten wird.

3. Laststeuer-Verfahren nach Anspruch 1 oder 2, wobei im Übergang von einem oberen in einen unteren Lastbereich kurzzeitig die Kraftstoffzufuhr abgeschaltet wird.

4. Laststeuer-Verfahren nach zumindest einem der vorangegangenen Ansprüche, wobei der untere Lastbereich der Leerlauf ist.

5. Laststeuer-Verfahren nach Anspruch 4, wobei eine konstante Leerlauf-Drehzahl durch Veränderung der Steuerzeiten eingeregelt wird.

6. Laststeuer-Verfahren nach zumindest einem der vorangegangenen Ansprüche für eine fremdgezündete Brennkraftmaschine, wobei zusätzlich der Zündzeitpunkt verändert wird.

## Claims

1. A method of adjusting operating points of a quantity-controlled piston internal combustion engine by influencing the amount of intake air supplied, control means for the gas exchange and a throttle means being provided in the intake tract, characterised in that the operating performance graph is divided into at least two load regions, the amount of intake air being mainly throttled in an upper load region whereas in a lower load region the throttling is unaltered and the adjustment of the engine operating point is made by altering the control times of the gas-exchange control means.

2. A method according to claim 1, characterised in that,when the control times of the gas-exchange control means are altered, the duration of opening thereof is kept constant.

3. A method of load control according to claim 1 or 2, in which the fuel supply is briefly switched off during the transition from an upper to a lower load region.

4. A method of load control according to at least one of the preceding claims, the lower load region being idling.

5. A method of load control according to claim 4, in which the idling speed is kept constant by varying the control times.

6. A method of load control according to at least one of the preceding claims for an externally ignited internal combustion engine, in which the ignition timing is additionally altered.

## Revendications

1. Procédé pour le réglage de points de fonctionnement d'un moteur à combustion interne à pistons alternatifs commandé par le remplissage des cylindres en influençant le débit d'air d'admission introduit, dans lequel des organes de commande pour le changement de la charge ainsi qu'un organe d'étranglement sont prévus dans la partie admission, procédé caractérisé en ce que le champ caractéristique est partagé en au moins deux zones de charge, le débit d'air d'admission étant en priorité étranglé dans une zone de charge supérieure et le réglage des points de fonctionnement du moteur à combustion interne ayant lieu dans une zone de charge inférieure sans modification de l'étranglement en modifiant les instants de commandes des organes de commande du chargement de charge.

2. Procédé selon la revendication 1, caractérisé en ce que lors de la modification des instants de commande des organes de commande du changement de charge on maintient constante leur durée d'ouverture.

3. Procédé de commande de la charge selon la revendication 1 ou 2, dans lequel au passage d'une zone de charge supérieure à une zone de charge inférieure on arrête brièvement l'arrivée du carburant.

4. Procédé de commande de la charge selon au moins l'une des revendications précédentes, dans lequel la zone de charge inférieure est la zone de ralenti.

5. Procédé de commande de la charge selon la revendication 4 dans lequel on règle une vitesse de rotation constante au ralenti en modifiant les instants de commande.

6. Procédé de commande la charge selon au moins l'une des revendications précédentes pour un moteur à combustion interne à allumage commandé dans lequel on modifie en outre le point d'allumage.
